# EUROPÄISCHE PATENTSCHRIFT

(11) **EP 0 382 940 B1**
(45) Veröffentlichungstag und Bekanntmachung des Hinweises auf die Patenterteilung: **30.06.1993**
(21) Anmeldenummer: 89123777.8
(22) Anmeldetag: 22.12.1989
(51) Int. Cl.: B60T 8/42

(54) **Vorrichtung zur Druckregulierung in einem hydraulischen System**
Pressure controller in a hydraulic system
Dispositif pour contrôle de pression dans un système hydraulique

(30) Priorität: 11.02.1989 DE 3904132
(43) Veröffentlichungstag der Anmeldung: 22.08.1990
(73) Patentinhaber: ROBERT BOSCH GMBH, 70442 Stuttgart (DE)
(72) Erfinder: Siegel, Heinz, D-7000 Stuttgart 40 (DE)

(56) Entgegenhaltungen:
- DE-A- 3 716 517
- GB-A- 2 163 503
- GB-A- 2 213 222

## Beschreibung

### Stand der Technik

Die Erfindung betrifft eine Vorrichtung zur Druckregulierung in einem hydraulischen System, insbesondere in Antiblockiersystemen von Fahrzeugen, entsprechend der im Oberbegriff des Anspruchs 1 definierten Gattung.

Vorrichtungen der benannten Art sind in mit Antiblokkiersystemen versehenen Bremsanlagen von Fahrzeugen enthalten. Die Fahrzeugbremsanlagen sind an den Rädern des Fahrzeuges angebracht und mit Bremsdruckleitungen versehen, die zu der hydraulischen Bremsanlage führen. Zur Erzeugung von Bremsdruck und damit der Bremswirkung wird mit Hilfe eines Fußpedals ein Hauptbremszylinder betätigt. Bei modernen Fahrzeugen sind zusätzlich Antiblockiersysteme eingebaut, mit denen im Antiblockierbetrieb ebenfalls ein Bremsdruck für eine automatisch angepaßte Bremsung erzeugt wird. Dazu sind an den Rädern Sensoren zum Erkennen einer Blockiergefahr angebracht, die über eine Steuereinheit beispielsweise auf einen Motor, eine Rückförderpumpe und magnetische Regelventile wirken und so in den Bremsleitungen geeignete Druckänderungen gegenüber dem Druck des Hauptbremszylinders erzeugen. Dabei treten bei Druckausgleich im Hauptbremszylinder am Fußpedal für den Fahrer spürbare Pulsationsbewegungen auf.

Aus DE-OS 31 07 963 ist eine Bremsfluiddruck-Steuervorrichtung für Antiblockiersysteme bekannt. Diese sieht eine Druckfluid-Zufuhrleitung zwischen dem Hauptzylinder und dem Steuerventil vor. Zur Beseitigung der aus Druckänderungen resultierenden Pedalrückwirkung werden in Bremssysteme angeordnete Rückschlagventile sowie eine Bypass-Leitung mit Drosselwirkung vorgeschlagen. Trotz Anordnung solcher Drosselstellen im Bremssystem entstehen jedoch fühlbare Pulsationsbewegungen am Fußpedal der Fahrzeugbremse. Ebenfalls vermag auch die aus DE-OS 26 43 860 bekannte metallische und drucksteife Dämpferkammer in Kombination mit einer Drosselstelle die auftretenden Pulsationsbewegungen nicht im ausreichenden Maße zu beseitigen.

Eine durch die GB-A- 2 163 503 bekannte Fahrzeugbremsanlage mit Regelventilen, mit einer Speicherkammer, mit einer Rückförderpumpe, mit einem Akkumulator und mit einer Drosselstelle in einem Bremskreis und mit einem Hauptzylinder hat zum schnellen Füllen von Radbremsen für den Normalbremsbetrieb Bypässe, die um Kombinationen aus der Drosselstelle und den für den Antiblockierbetrieb bestimmten Regelventilen herumführen und aus einem elektrisch steuerbaren 2/2-Ventil und zwei Rückschlagventilen bestehen. Solch ein 2/2-Ventil ist einerseits teuer und benötigt andererseits ein besonders dafür eingerichtetes elektronisches Steuergerät. Wenn das Steuergerät Blockiergefahr erkennt, muß es das 2/2-Ventil schließen.

### Vorteile der Erfindung

Bei einer Vorrichtung der eingangs genannten Art wird durch die im kennzeichnenden Teil des Hauptanspruches angegebenen Merkmale die am Fußpedal auftretende Pulsationsbewegung beseitigt.

Durch die Anordnung eines im hydraulischen System der Fahrzeugbremsanlage zwischen der Dämpferkammer und dem Hauptzylinder des ABS gelegenen Drosselumschaltventils ist eine preisgünstige flexible Möglichkeit geschaffen, den Druckabbau bzw. Druckaufbau entsprechend den an eine effektive Abbremsung des Fahrzeuges und den an die Pulsationsfreiheit des Fußpedals gestellten Anforderungen zu regeln. Bei einem Bremsvorgang, bei dem ein Bremsdruck von nicht mehr als 10 bar aufgebaut ist, findet dabei die Bremsdruckförderung einen ungedrosselten Durchgang durch das Drosselumschaltventil. Wird dagegen ein Bremsdruck von mehr als 10 bar im Hauptzylinder erzeugt, wird das Drosselumschaltventil in eine zweite Stellung gebracht und bei Eintreten der Rückförderung der Bremsflüssigkeit deren Durchgang durch das Drosselumschaltventil gedrosselt und somit eine am Fußpedal auftretende Druckpulsation weitgehenst abgebaut bzw. völlig be- seitigt. Bei schnellem Abbremsen wird über ein im Drosselumschaltventil vorhandenes Bypass-Ventil eine direkte Verbindung zu den Radzylindern hergestellt und damit ein schneller Druckaufbau erreicht. Im ABS-Regelfall fördert die Rückförderpumpe bei Druckaufbau direkt über die Regelventile zu den Radzylindern. Über das Bypassventil kann vom Hauptzylinder jederzeit zusätzlich Volumen noch nachgedrückt werden.

Zum Abbau der Druckpulsation trägt auch ein der Dämpferkammer vorgespannter Federspeicher bei. Dieser dient dem Ausgleich der Druckvolumen sowie der Druckpulsation. Vorteilhaft wirkt sich dabei auch aus, daß eine Dämpferkammer größeren Volumens nicht erforderlich ist, um über die Kompressibilität des Druckmediums die Schwankungen ausgleichen zu können. Entlastet der Fahrer den Hauptzylinder, geht das Drosselumschaltventil wieder in seine Ausgangsstellung zurück und ermöglicht einen raschen Druckabbau.

Da das Drosselumschaltventil als Leitungsventil oder als Einschraubventil ausgebildet sein kann, muß ein herkömmliches ABS-Gerät nicht verändert werden. Vielmehr ist das erfindungsgemäße Drosselumschaltventil nachrüstbar.

Durch Ausbildung großer Drosselbohrungen im Drosselpaket des Drosselumschaltventils und einer Ringnut am im Drosselumschaltventil vorhandenen Stufenkolben an seiner dem Deckelelement abgewandten Stirnseite wird erreicht, daß das Drosselumschaltventil im Flachsitz des Stufenkolbens schmutzunempfindlich ist. Dies ist erforderlich, da bei geringsten Öffnungen zwischen dem Gehäuse des Drosselumschaltventils und dem ihm einliegenden Stufenkolben ein ungedrosselter Durchgang für die Bremsflüssigkeit geöffnet wird.

### Zeichnung

Die Erfindung wird nachfolgend anhand der Zeichnungen näher erläutert. Es zeigen:
Figur 1 eine schematische Darstellung einer Ausführungsform einer erfindungsgemäßen Vorrichtung innerhalb einer Bremsanlage mit Antiblockiersystem für ein Kraftfahrzeug,
Figur 2 eine Darstellung des Federspeichers und der Dämpferkammer im Querschnitt aus der Seitenansicht,
Figur 3 eine Darstellung eines Drosselumschaltventils in geschnittener Form aus der Seitenansicht und
Figur 4 eine Darstellung des in Figur 3 dargestellten Drosselumschaltventils im Querschnitt entlang der Linie A-B.

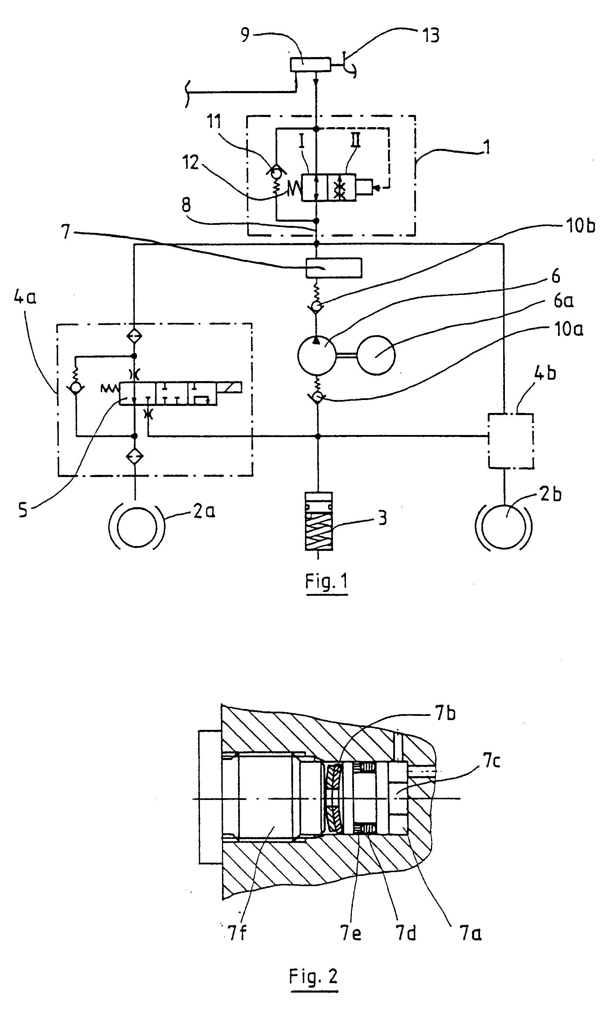

Der durch Figur 1 wiedergegebene Schaltplan für einen Bremskreis entspricht weitgehendst dem der herkömmlichen Antiblockiersysteme für Fahrzeugbremsanlagen. In diesen Aufbau wurde erfindungsgemäß ein Drosselumschaltventil 1 zwischengeschaltet.

Beim ABS-Regelvorgang wird in der Phase des Druckabbaus Bremsflüssigkeit aus den Radbremszylindern 2a, b in die Speicherkammer 3 gefördert. Dies erfolgt über Regelventile 4a, b. Das mit der Ziffer 4a gekennzeichnete Regelventil zeigt dessen Funktionsweise in schematischer Darstellung. Das Regelventil 4b entspricht diesem Aufbau und wurde lediglich aus Vereinfachungsgründen in der dargestellten Art skizziert. Die Förderung der Bremsflüssigkeit erfolgt innerhalb der Regelventile 4a, b über Magnetventile 5, die elektrisch betätigt werden. Von der Speicherkammer 3 wird Bremsflüssigkeit bei der Rückförderung durch die Rückförderpumpe 6 über die Dämpferkammer 7 in die Leitung 8 zum Hauptzylinder 9 gefördert. Zwischen der Speicherkammer 3 und der Rückförderpumpe 6 sowie zwischen dieser und der Dämpferkammer 7 sind Rückschlagventile 10 a, b angeordnet. Das Drosselumschaltventil 1 beinhaltet ein Bypass-Ventil 11 und einen Stufenkolben, der mittels einer Rückstellfeder 12 abhängig von der Höhe des Bremsdruckes in eine Stellung I oder II verbracht wird. Die Stellung I ist dabei im nichtgebremsten Zustand und bei schnellem Bremsdruckabbau gegeben, während die Stellung II sich bei jedem Bremsvorgang einstellt, sobald der Bremsdruck im Hauptzylinder ca. 10 bar erreicht. In der Stellung I ist für die Bremsflüssigkeit ein ungedrosselter Durchgang möglich. Entspannt der Fahrer nach einem Bremsvorgang, bei dem ein Bremsdruck von mehr als 10 bar erreicht worden ist, rasch mittels des Fußpedals 13 die Bremse, so fällt der Druck im Hauptzylinder schnell ab und durch den höheren Druck in Leitung 8 wird das Umschaltventil mittels der Rückstellfeder 12 aus der Stellung II in die Stellung I verbracht. Bei der ABS-Regelung steht das Umschaltventil bei einem Druck von mehr als 10 bar im Hauptzylinder in Stellung II. Bei Eintreten der Rückförderung von Bremsflüssigkeit durch die Rückförderpumpe 6, die mittels eines Elektromotors 6a betrieben ist, wird die Druckpulsation über die Dämpferkammer 7 und die starke Drosselung im Umschaltventil vor dem Hauptzylinder 9 abgebaut. Durch die Drosselstelle in der Stellung II fließt ein weitgehendst konstanter Druck zurück zum Hauptzylinder 9. Durch die direkte Verbindung vor der Dämpferkammer 7 zu den Regelventilen 4a, b fördert die Rückförderpumpe 6 bei Druckaufbau in der Regelphase direkt in die Radbremszylinder 2a, b. Reicht das Bremsvolumen in der Speicherkammer 3 nicht aus, kann über das Bypass-Ventil 11 vom Hauptzylinder 9 Bremsdruckmedium nachfließen. Bei raschem Anbremsen garantiert das Bypass-Ventil 11 ebenfalls eine direkte Bremsdruckförderung in jeder Bremsphase.

Um die Druckpulsation abbauen zu können, müßte die Dämpferkammer 7 ein ausreichend großes Volumen aufweisen, um über die Kompressibilität des Druckmediums die Schwankungen ausgleichen zu können. Erfindungsgemäß ist daher, wie in Figur 2 dargestellt, anstelle eines größeren Volumens der Dämpferkammer 7a ein Federpspeicher vorgesehen, der über eine sehr steife Feder z.B. auf ca. 130 bar (Blockierdruck) vorgespannt ist und einen lediglich sehr geringen Hub macht, um die Volumen-und Druckpulsation der aus der Zeichnung nicht ersichtlichen Rückförderpumpe auszugleichen. Die Druckfeder 7b kann z.B. ein Tellerfederpaket sein, das auf einen Kolben 7c wirkt, der durch einen O-Ring 7d und Stützring 7e abgedichtet ist. Eine Verschlußschraube 7f verschließt dabei die Gehäusebohrung. Der Federspeicher ist sehr hoch vorgespannt, damit beim normalen Bremsen kein Bremsvolumen verlorengeht.

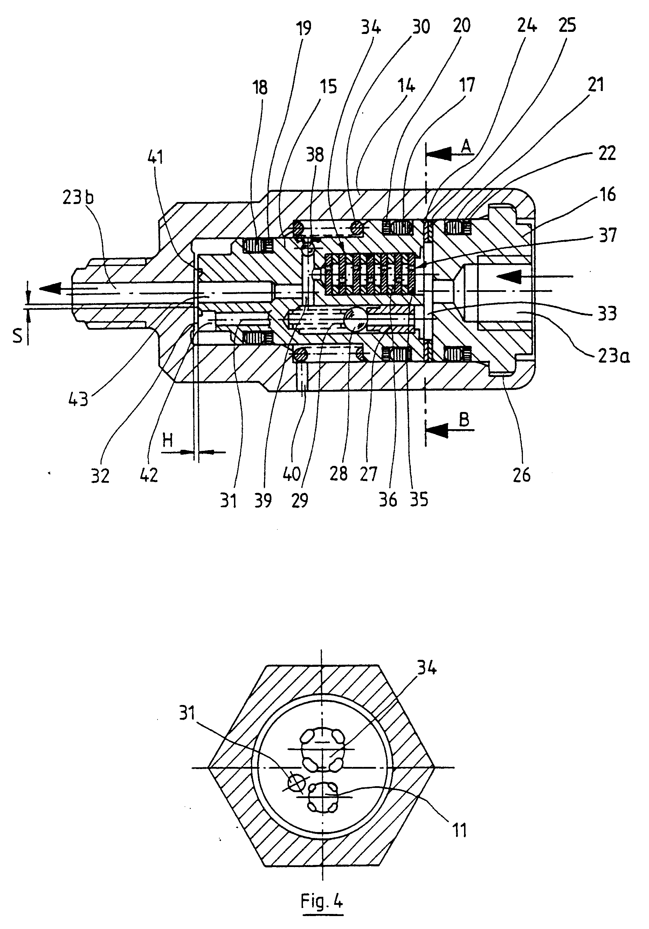

In Figur 3 ist im Querschnitt das Gehäuse 14 des Druckumschaltventils dargestellt, dem ein Stufenkolben 15 sowie ein Deckelelement 16 einliegt. Der Stufenkolben 15 ist mit den O-Ringen 17, 18 und den Stützringen 19, 20 im Gehäuse 14 des Drosselumschaltventils 1 geführt. Das Deckelelement 16 weist ebenfalls einen O-Ring 21 und Stützring 22 auf und verschließt die zum Hauptzylinder führende Gehäusebohrung 23. Über Ausgleichsscheiben 24 und 25 wird ein definierter Hub H (z.B. 0,4 mm) eingestellt. Das Deckelelement 16 ist an seinem Bund 26 profiliert und verdrehsicher eingepreßt sowie verstemmt. Das Bypass-Ventil wird von dem eingepreßten Ventilsitz 27, einer Kugel 28 sowie einer Druckfeder 29 gebildet. Der Ventilsitz 27 ist zusätzlich verstemmt. Der Stufenkolben 15 steht durch eine Druckfeder 30 an seinem rechten Anschlag an den Ausgleichsscheiben 24 und 25 und entspricht damit der in der Figur 1 dargestellten Stellung I. Über eine Längsbohrung 31 und den Schlitz 32, der durch den Hub H gebildet wird, ist ein freier Durchgang von Bremsflüssigkeit zu den Radzylindern eröffnet, was durch den in diesem Bereich befindlichen Pfeil dargestellt ist. Wirken im Raum 33 ca. 10 bar, fährt der Stufenkolben 15 nach links und verschließt den Durchgang durch Schlitz 32. Damit besteht lediglich noch eine Verbindung aus Richtung der Rückförderpumpe zum Hauptzylinderanschluß über das Drosselpaket 34. In diesem Fall befindet sich das Drosselumschaltventil in der in Figur 1 als Schaltstellung II bezeichneten Stellung. Das Drosselpaket 34 besteht aus sieben Drosselscheiben 35 und 6 Stützscheiben 36. Das Drosselpaket 34 ist im Stufenkolben 15 verstemmmt. Durch das Drosselpaket 34 kann eine relativ hohe Drosselwirkung erzielt werden. Dabei können die Drosselbohrungen 37 größer gewählt werden, als bei Verwendung nur einer Bohrung, da sieben Drosselbohrungen von einen Durchschnittswert 0,5 einer Drosselbohrung vom Durchschnittswert 0,3 entsprechen. Die Drosselbohrungen 37 sind daher schmutzunempfindlicher. Eine eingepreßte und verstemmte Kugel 38 verschließt die Querbohrung 39. Die Bohrung 40 stellt eine Entlastungsbohrung dar. Durch die Ringnut 41 am linken Ende des Stufenkolbens 15 und die partielle Ansenkung 42 besteht auch bei geringsten Bewegungen des Stufenkolbens 15 in Richtung auf das Deckelelement 16 ein Schlitz 32, der den Weg zu der Bohrung 31 freigibt. Durch die Ringnut 41 ist der Flachsitz des Stufenkolbens 15 schmutzunempfindlicher, da er in seiner am Drosselumschaltventilgehäuse 14 anliegenden Position eine geringe Überdeckung S aufweist.

Der durch Figur 4 dargestellte Querschnitt durch das Drosselumschaltventil zeigt das Bypassventil 11 sowie das Drosselpaket 34. Ebenfalls ist aus dieser Figur die Längsbohrung 31 ersichtlich.

## Patentansprüche

1. Vorrichtung zur Druckregulierung in einem hydraulischen System, insbesondere in Antiblockiersystemen von Fahrzeugbremsanlagen, das Radbremszylinder (2a, 2b), Regelventile (5) und eine durch diese mit Bremsflüssigkeit versorgte Speicherkammer (3) beinhaltet sowie eine Rückförderpumpe (6) und eine damit in Verbindung stehende Dämpferkammer (7), an deren Ausgang eine Drosselstelle (II, 37) befindlich ist, durch die Bremsflüssigkeit in einen Hauptzylinder (9) geleitet wird, wobei zwischen der Speicherkammer (3) und der Rückförderpumpe (6) sowie zwischen dieser und der Dampferkammer (7) Rückschlagventile (10a, 10b) vorgesehen sind, dadurch gekennzeichnet, daß zwischen der Dämpferkammer (7) und dem Hauptzylinder (9) ein der Drosselstelle (37) zugeordnetes Drosselumschaltventil (1) angeordnet ist und der Dämpferkammer (7) ein durch einen vorgespannten Federspeicher (7b) gebildetes Dämpfungselement (7c) zugeordnet ist.

2. Vorrichtung nach Anspruch 1, dadurch gekennzeichnet, daß das Drosselumschaltventil (1) als Leitungs-oder Einschraubventil ausgebildet ist.

3. Vorrichtung nach Anspruch 1 oder 2, dadurch gekennzeichnet, daß das Drosselumschaltventil (1) ein Gehäuse (14) aufweist, an dem Gehäusebohrungen (23a, b) für Anschlüsse zum Hauptzylinder (9) und zu der Dampferkammer (7) vorgesehen sind.

4. Vorrichtung nach einem der vorhergehenden Ansprüche, dadurch gekennzeichnet, daß sich im Gehäuse (14) des Drosselumschaltventils (1) im Bereich der als Anschluß zum Hauptzylinder (9) vorgesehenen Gehäusebohrung (23a) ein mit einem O-Ring (21) und einem Stützring (22) umschlossenes Deckelelement (16) vorgesehen ist, das eine Bohrung aufweist.

5. Vorrichtung nach einem der vorhergehenden Ansprüche, dadurch gekennzeichnet, daß im Gehäuse (14) des Drosselumschaltventils (1) ein Stufenkolben (15) mit ihn umschließenden O-Ringen (17, 18) und Stützringen (19, 20) zwischen dem Deckelelement (16) und der diesem gegenüberliegenden Stirnseite des Gehäuses (14) des Drosselumschaltventils (1) gleitend geführt ist, wobei zwischen dem Deckelelement (16) und dem Stufenkolben (15) Ausgleichsscheiben (24, 25) und zwischen dem Stufenkolben (15) und dem Gehäuse (14) eine Druckfeder (30) angeordnet sind.

6. Vorrichtung nach Anspruch 5, dadurch gekennzeichnet, daß der Stufenkolben (15) bei Anschlag an die Ausgleichsscheiben (24, 25) an seiner gegenüberliegenden Stirnseite einen Schlitz (32) zum Gehäuse (14) des Drosselumschaltventils (1) freigibt, der einen freien Durchgang zu den Radzylindern (2a, b) eröffnet und in umgekehrter Richtung über die Längsbohrung (31) einen freien Durchgang zum Hauptzylinder gewährleistet.

7. Vorrichtung nach Anspruch 5, dadurch gekennzeichnet, daß der Stufenkolben (15) bei Anschlag an die Gehäuseinnenwand des Drosselumschaltventils (1) nur noch einen gedrosselten Durchgang für die Bremsflüssigkeit zum Hauptzylinder hin ermöglicht.

8. Vorrichtung nach Anspruch 5, dadurch gekennzeichnet, daß dem Stufenkolben (15) ein Bypass-Ventil (11) einliegt, das aus einem mit dem Stufenkolben (15) verstemmten Ventilsitz (27), einer Kugel (28) und einer Druckfeder (29) besteht und in eine im Stufenkolben (15) verlaufende Längsbohrung (43) mündet.

9. Vorrichtung nach Anspruch 5, dadurch gekennzeichnet, daß der Stufenkolben (15) ein Drosselpaket (34) enthält, das aus mehreren Drosselscheiben (35) und Stützscheiben (36) besteht und in seiner Gesamtheit im Stufenkolben (15) verstemmt ist, und daß die das Drosselpaket (34) durchlaufenden Drosselbohrungen (37) in eine im Stufenkolben (15) verlaufende Querbohrung (39) einmünden, die durch eine eingepreßte und verstemmte Kugel (38) verschließbar ist und die in eine im Stufenkolben (15) bis zu seiner dem Deckelelement (16) abgewandten Stirnseite verlaufende Längsbohrung (43) mündet.

10. Vorrichtung nach Anspruch 5, dadurch gekennzeichnet, daß der Stufenkolben (15) an seiner dem Deckelelement (16) abgewandten Stirnseite eine Ringnut (41) aufweist, die durch eine Ansenkung (42) mit der Längsbohrung (31) verbunden ist.

11. Vorrichtung nach Anspruch 1, dadurch gekennzeichnet, daß der Federspeicher über eine steife Feder (7b), die als Tellerfederpaket oder dergleichen ausgebildet ist, auf einen die Dämpferkammer durchlaufenden Kolben (7c) wirkt, der durch einen O-Ring (7d) und einen Stützring (7e) abgedichtet ist.

12. Vorrichtung nach Anspruch 11, dadurch gekennzeichnet, daß die steife Feder (7b) auf den Blockierdruck einer Bremsanlage vorgespannt ist.

## Claims

1. Appliance for pressure regulation in a hydraulic system, in particular in anti-lock systems of vehicle brake installations, which includes the wheel brake cylinder (2a, 2b), control valves (5) and a reservoir chamber (3), supplied with brake fluid by these control valves (5), as well as a return pump (6) and a damper chamber (7) connected to it, on the outlet of which damper chamber (7) there is a throttle location (II, 37) through which brake fluid is led into a main cylinder (9), non-return valves (10a, 10b) being provided between the reservoir chamber (3) and the return pump (6) and between the latter and the damper chamber (7), characterised in that a throttle switch-over valve (1) associated with the throttle location (37) is arranged between the damper chamber (7) and the main cylinder (9) and a damping element (7c) formed by a preloaded spring reservoir (7b) is associated with the damper chamber (7).

2. Appliance according to Claim 1, characterised in that the throttle switch-over valve (1) is configured as a conduit valve or a screw-in valve.

3. Appliance according to Claim 1 or 2, characterised in that the throttle switch-over valve (1) has a housing (14) on which are provided housing holes (23a, b) for connections to the main cylinder (9) and to the damper chamber (7).

4. Appliance according to one of the preceding claims, characterised in that a cover element (16), which has a hole and is surrounded by an O-ring (21) and a support ring (22), is provided in the housing (14) of the throttle swith-over valve (1) in the region of the housing hole (23a) provided as the connection to the main cylinder (9).

5. Appliance according to one of the preceding claims, characterised in that a stepped piston (15), with O-rings (17, 18) and support rings (19, 20) surrounding it, is guided in the housing (14) of the throttle switch-over valve (1) between the cover element (16) and the end, opposite to the latter, of the housing (14) of the throttle switch-over valve (1), shim washers (24, 25) being arranged between the cover element (16) and the stepped piston (15) and a compression spring (30) being arranged between the stepped piston (15) and the housing (14).

6. Appliance according to Claim 5, characterised in that when the stepped piston (15) comes into contact with the shim washers (24, 25), it frees, at its opposite end, a slot (32) to [sic] the housing (14) of the throttle switch-over valve (1), which slot opens a free passage to the wheel cylinders (2a, b) and, in the reverse direction, ensures a free passage to the main cylinder by means of the longitudinal hole (31).

7. Appliance according to Claim 5, characterised in that when the stepped piston (15) is in contact with the housing inner wall of the throttle switch-over valve (1), it only permits a throttled passage for the brake fluid to the main cylinder.

8. Appliance according to Claim 5, characterised in that within the stepped piston (15) there is a bypass valve (11), which consists of a valve seat (27) caulked to the stepped piston (15), a ball (28) and a compression spring (29) and which opens into a longitudinal hole (43) extending in the stepped piston (15).

9. Appliance according to Claim 5, characterised in that the stepped piston (15) includes a throttle pack (34), which consists of a plurality of throttle discs (35) and support washers (36) and is caulked, in its entirety, in the stepped piston (15), and in that the throttle holes (37) passing through the throttle pack (34) open into a transverse hole (39) extending in the stepped piston (15), which transverse hole (39) can be closed by a ball (38), which is pressed in and caulked, and which transverse hole (39) opens into a longitudinal hole (43) extending in the stepped piston (15) as far as its end facing away from the cover element (16).

10. Appliance according to Claim 5, characterised in that the stepped piston (15) has, on its end facing away from the cover element (16), an annular groove (41) which is connected to the longitudinal hole (31) by a counter-bore (42).

11. Appliance according to Claim 1, characterised in that the spring reservoir acts on a piston (7c), which passes through the damper chamber, by means of a stiff spring (7b) which is configured as a plate spring pack or the like, which piston (7c) is sealed by an O-ring (7d) and a support ring (7e).

12. Appliance according to Claim 11, characterised in that the stiff spring (7b) is preloaded to the locking pressure of a brake installation.

## Revendications

1. Dispositif pour contrôler la pression dans un système hydraulique, en particulier dans des systèmes anti-blocage pour installations de freinage de véhicules, qui comprend des cylindres de freins de roue (2a, 2b), des soupapes de régulation (5) et une chambre d'accumulation (3) alimentée en liquide de freinage ainsi qu'une pompe de refoulement (6) et une chambre d'amortissement (7) se trouvant avec elle en liaison, chambre (7) à la sortie de laquelle se trouve un emplacement d'étranglements (II, 37) à travers lequel le liquide de freinage est dirigé dans un maître-cylindre (9), tandis qu'entre la chambre d'accumulation (3) et la pompe de refoulement (6) ainsi qu'entre cette pompe et la chambre d'amortissement (7) sont prévus des soupapes de non retour (10a, 10b), dispositif caractérisé en ce qu'entre la chambre d'amortissement (7) et le maître-cylindre (9) est disposé une soupape de commutation d'étranglement associée à l'emplacement d'étranglements (37) et en ce qu'un élément amortisseur (7c) constitué par un accumulateur à ressort (7b) précontraint est associé à la chambre d'amortissement (7).

2. Dispositif selon la revendication 1, caractérisé en ce que la soupape de commutation d'étranglement (1) est constituée comme une soupape de canalisation ou une soupape à visser.

3. Dispositif selon la revendication 1 ou 2, caractérisé en ce que la soupape de commutation d'étranglement (1) présente un boîtier (14), sur lequel sont prévus des alésages de boîtier (23a, b) pour des raccords au maître-cylindre (9) et à la chambre d'amortissement (7).

4. Dispositif selon l'une des revendications précédentes, caractérisé en ce que dans le boîtier (14) de la soupape de commutation d'étranglement (1), est prévu dans la zone de l'alésage de boîtier (23a), comme raccordement au maître-cylindre (9), un élément de recouvrement (16) entouré d'un joint torique (21) et d'une bague d'appui (22) qui présente un alésage.

5. Dispositif selon l'une des revendications précédentes, caractérisé en ce que dans le boîtier (14) de la soupape de commutation d'étranglement (1), on fait passer en glissant un piston à gradins (15) avec des joints toriques (17, 18) et des bagues d'appui (19, 20) l'entourant, entre l'élément de recouvrement (16) et la face frontale située en regard de celui-ci, du boîtier (14) de la soupape de commutation d'étranglement (1), des disques d'équilibrage (24, 25) étant disposés entre l'élément de recouvrement (16) et le piston à gradins (15) et un ressort de pression (30) étant disposé entre le piston à gradins (15) et le boîtier (14).

6. Dispositif selon la revendication 5, caractérisé en ce que le piston à gradins (15) libère une fente (32) allant au boîtier (14) de la soupape de commutation d'étranglements (1) dans le cas où il est en butée sur les disques de compensation (24, 25) par sa face frontale située en regard, vanne qui ouvre un passage libre vers les cylindres de roue (2a, b) et garantit en sens inverse par l'alésage longitudinal (31) un passage libre vers le maître-cylindre.

7. Dispositif selon la revendication 5, caractérisé en ce que le piston à gradins (15) permet, quand il est en butée sur la paroi intérieure du boîtier de la soupape de commutation d'étranglements (1), d'avoir seulement encore un passage étranglé pour le liquide de freinage vers le maître-cylindre.

8. Dispositif selon la revendication 5, caractérisé en ce qu'une soupape de dérivation (11) est incorporée au piston à gradins (15), soupape qui se compose d'un siège de soupape (27) maté avec le piston à gradins (15), une bille (28) et un ressort de pression (29) et débouche dans un alésage longitudinal (43) s'étendant dans le piston à gradins (15).

9. Dispositif selon la revendication 5, caractérisé en ce que le piston à gradins (15) contient un paquet d'étranglements (34), qui consiste en plusieurs disques d'étranglement (35) et disques d'appui (36) et est en totalité maté dans le piston à gradins (15) et en ce que les alésages d'étranglement (37) passant à travers le paquet d'étranglements (34) débouchent dans un alésage transversal (39) s'étendant dans le piston à gradins (15), alésage transversal qui peut être fermé par une bille enfoncée à force et matée (38) et qui débouche dans un alésage longitudinal (43) s'étendant dans le piston à gradins (15) jusqu'à sa face frontale située à l'opposé de l'élément de recouvrement (16).

10. Dispositif selon la revendication 5, caractérisé en ce que le piston à gradins (15) présente sur sa face frontale tournée à l'opposé de l'élément de recouvrement (16) une rainure annulaire (41) qui est reliée par un enfoncement (42) à l'alésage longitudinal (31).

11. Dispositif selon la revendication 1, caractérisé en ce que l'accumulateur à ressort agit par un ressort raide (7b) qui est constitué comme un paquet de ressorts à disque ou analogue, sur un piston passant à travers la chambre d'amortissement, piston qui est étanché par un joint torique (7d) et une bague d'appui (7e).

12. Dispositif selon la revendication 11, caractérisé en ce que le ressort raide (7b) est précontraint à la pression de blocage d'une installation de freinage.
